(19) Europäisches Patentamt
European Patent Office
Office européen des brevets

(11) EP 2 204 931 A2

(12) EUROPEAN PATENT APPLICATION

(43) Date of publication:
07.07.2010 Bulletin 2010/27

(51) Int Cl.:
H04J 1/00 (2006.01)   H04B 7/08 (2006.01)
H04B 7/04 (2006.01)   H04L 25/03 (2006.01)

(21) Application number: 10004386.8

(22) Date of filing: 07.06.2006

(84) Designated Contracting States:
AT BE BG CH CY CZ DE DK EE ES FI FR GB GR HU IE IS IT LI LT LU LV MC NL PL PT RO SE SI SK TR

(30) Priority: 16.06.2005 US 691756 P
21.06.2005 US 158586

(62) Document number(s) of the earlier application(s) in accordance with Art. 76 EPC:
06772504.4 / 1 894 329

(71) Applicant: Qualcomm Incorporated
San Diego, CA 92121-1714 (US)

(72) Inventors:
• Howard, Steven J.
Ashland
Massachusetts 01721 (US)
• Ketchum, John W.
Harvard
Massachusetts 01451 (US)

• Wallace Mark S.
Bedford
Massachusetts 01730 (US)
• Monsen, Peter
Wellesley
Massachusetts 02482 (US)
• Walton, Jay Rodney
Carlisle
Massachusetts 01741 (US)

(74) Representative: Carstens, Dirk Wilhelm
Wagner & Geyer
Gewürzmühlstrasse 5
80538 München (DE)

Remarks:
This application was filed on 26-04-2010 as a divisional application to the application mentioned under INID code 62.

(54) **Efficient filter weight computation for a mimo system**

(57) Techniques to efficiently derive a spatial filter matrix are described. In a first scheme, a Hermitian matrix is iteratively derived based on a channel response matrix, and a matrix inversion is indirectly calculated by deriving the Hermitian matrix iteratively. The spatial filter matrix is derived based on the Hermitian matrix and the channel response matrix. In a second scheme, multiple rotations are performed to iteratively obtain first and second matrices for a pseudo-inverse matrix of the channel response matrix. The spatial filter matrix is derived based on the first and second matrices. In a third scheme, a matrix is formed based on the channel response matrix and decomposed to obtain a unitary matrix and a diagonal matrix. The spatial filter matrix is derived based on the unitary matrix, the diagonal matrix, and the channel response matrix.

FIG. 3

**Description**

**BACKGROUND**

**I. Field**

The present disclosure relates generally to communication, and more specifically to techniques for computing filter weights in a communication system.

**II. Background**

A multiple-input multiple-output (MIMO) communication system employs multiple (T) transmit antennas at a. transmitting station and multiple (R) receive antennas at a receiving station for data transmission. A MIMO channel formed by the T transmit antennas and the R receive antennas may be decomposed into S spatial channels, where S ≤ min {T, R}. The S spatial channels may be used to transmit data in a manner to achieve higher overall throughput and/or greater reliability.

The transmitting station may simultaneously transmit T data streams from the T transmit antennas. These data streams are distorted by the MIMO channel response and further degraded by noise and interference. The receiving station receives the transmitted data streams via the R receive antennas. The received signal from each receive antenna contains scaled versions of the T data streams sent by the transmitting station. The transmitted data streams are thus dispersed among the R received signals from the R receive antennas. The receiving station would then perform receiver spatial processing on the R received signals with a spatial filter matrix in order to recover the transmitted data streams.

The derivation of the weights for the spatial filter matrix is computationally intensive. This is because the spatial filter matrix is typically derived based on a function that contains a matrix inversion, and direct calculation of the matrix inversion is computationally intensive.

There is therefore a need in the art for techniques to efficiently compute the filter weights.

**SUMMARY**

Techniques for efficiently computing the weights for a spatial filter matrix are described herein. These techniques avoid direct computation of matrix inversion.

In a first embodiment for deriving a spatial filter matrix $\underline{\mathbf{M}}$, Hermitian matrix $\underline{\mathbf{P}}$ is iteratively derived based on a channel response matrix $\underline{\mathbf{H}}$, and a matrix inversion is indirectly calculated by deriving the Hermitian matrix iteratively. The Hermitian matrix may be initialized to an identity matrix. One iteration is then performed for each row of the channel response matrix, and an efficient sequence of calculations is performed for each iteration. For the $i$-th iteration, an intermediate row vector $\underline{\mathbf{a}}_i$ is derived based on a channel response row vector $\underline{\mathbf{h}}_i$, which is the $i$-th row of the channel response matrix. A scalar $r_i$ is derived based on the intermediate row vector and the channel response row vector. An intermediate matrix $\underline{\mathbf{C}}_i$ is also derived based on the intermediate row vector. The Hermitian matrix is then updated based on the scalar and the intermediate matrix. After all of the iterations are completed, the spatial filter matrix is derived based on the Hermitian matrix and the channel response matrix.

In a second embodiment, multiple rotations are performed to iteratively obtain a first matrix $\underline{\mathbf{P}}^{1/2}$ and a second matrix $\underline{\mathbf{B}}$ for a pseudo-inverse matrix of the channel response matrix. One iteration is performed for each row of the channel response matrix. For each iteration, a matrix $\underline{\mathbf{Y}}$ containing the first and second matrices from the prior iteration is formed. Multiple Givens rotations are then performed on matrix $\underline{\mathbf{Y}}$ to zero out elements in the first row of the matrix to obtain updated first and second matrices for the next iteration. After all of the iterations are completed, the spatial filter matrix is derived based on the first and second matrices.

In a third embodiment, a matrix $\underline{\mathbf{X}}$ is formed based on the channel response matrix and decomposed (e.g., using eigenvalue decomposition) to obtain a unitary matrix $\underline{\mathbf{V}}$ and a diagonal matrix $\underline{\Lambda}$. The decomposition may be achieved by iteratively performing Jacobi rotations on matrix $\underline{\mathbf{X}}$. The spatial filter matrix is then derived based on the unitary matrix, the diagonal matrix, and the channel response matrix.

Various aspects and embodiments of the invention are described in further detail below.

**BRIEF DESCRIPTION OF THE DRAWINGS**

The features and nature of the present invention will become more apparent from the detailed description set forth below when taken in conjunction with the drawings in which like reference characters identify correspondingly throughout.

FIGS. 1, 2 and 3 show processes for computing an MMSE spatial filter matrix based on the first, second, and third embodiments, respectively.

FIG. 4 shows a block diagram of an access point and a user terminal.

**DETAILED DESCRIPTION**

The word "exemplary" is used herein to mean "serving as an example, instance, or illustration." Any embodiment or design described herein as "exemplary" is not necessarily to be construed as preferred or advantageous over other embodiments or designs.

The filter weight computation techniques described herein may be used for a single-carrier MIMO system and a multi-carrier MIMO system. Multiple carriers may be obtained with orthogonal frequency division multiplexing (OFDM), interleaved frequency division multiple access (IFDMA), localized frequency division multiple access (LFDMA), or some other modulation technique. OFDM, IFDMA, and LFDMA effectively partition the overall system bandwidth into multiple (K) orthogonal frequency subbands, which are also called tones, subcarriers, bins, and frequency channels. Each subband is associated with a respective subcarrier that may be modulated with data. OFDM transmits modulation symbols in the frequency domain on all or a subset of the K subbands. IFDMA transmits modulation symbols in the time domain on subbands that are uniformly spaced across the K subbands. LFDMA transmits modulation symbols in the time domain and typically on adjacent subbands. For clarity, much of the following description is for a single-carrier MIMO system with a single subband.

A MIMO channel formed by multiple (T) transmit antennas at a transmitting station and multiple (R) receive antennas at a receiving station may be characterized by an R×T channel response matrix $\underline{H}$, which may be given as:

$$\underline{H} = \begin{bmatrix} h_{1,1} & h_{1,2} & \cdots & h_{1,T} \\ h_{2,1} & h_{2,2} & \cdots & h_{2,T} \\ \vdots & \vdots & \ddots & \vdots \\ h_{R,1} & h_{R,2} & \cdots & h_{R,T} \end{bmatrix} = \begin{bmatrix} \underline{h}_1 \\ \underline{h}_2 \\ \vdots \\ \underline{h}_R \end{bmatrix}, \qquad \text{Eq (1)}$$

where $h_{i,j}$, for $i = 1,..., R$ and $j = 1,..., T$, denotes the coupling or complex channel gain between transmit antenna $j$ and receive antenna $i$; and
$\underline{h}_i$ is a 1×T channel response row vector for receive antenna $i$, which is the $i$-th row of $\underline{H}$.
For simplicity, the following description assumes that the MIMO channel is full rank and that the number of spatial channels (S) is given as: S=T≤R.

The transmitting station may transmit T modulation symbols simultaneously from the T transmit antennas in each symbol period. The transmitting station may or may not perform spatial processing on the modulation symbols prior to transmission. For simplicity, the following description assumes that each modulation symbol is sent from one transmit antenna without any spatial processing.

The receiving station obtains R received symbols from the R receive antennas in each symbol period. The received symbols may be expressed as:

$$\underline{r} = \underline{H} \cdot \underline{s} + \underline{n}, \qquad \text{Eq (2)}$$

where $\underline{s}$ is a T×1 vector with T modulation symbols sent by the transmitting station;
$\underline{r}$ is an R×1 vector with R received symbols obtained by the receiving station from the R receive antennas; and
$\underline{n}$ is an R×1 vector of noise.
For simplicity, the noise may be assumed to be additive white Gaussian noise (AWGN) with a zero mean vector and a covariance matrix of $\sigma_n^2 \cdot \underline{I}$, where $\sigma_n^2$ is the variance of the noise and $\underline{I}$ is the identity matrix.

The receiving station may use various receiver spatial processing techniques to recover the modulation symbols sent by the transmitting station. For example, the receiving station may perform minimum mean square error (MMSE) receiver spatial processing, as follows:

$$\hat{\underline{s}} = (\sigma_n^2 \cdot \underline{I} + \underline{H}^H \cdot \underline{H})^{-1} \cdot \underline{H}^H \cdot \underline{r} = \underline{P} \cdot \underline{H}^H \cdot \underline{r} = \underline{M} \cdot \underline{r} , \qquad\qquad \text{Eq (3)}$$

where $\underline{M}$ is a T×R MMSE spatial filter matrix;
$\underline{P}$ is a T×T Hermitian covariance matrix for the estimation error $\underline{s} - \hat{\underline{s}}$;
$\hat{\underline{s}}$ is a T×1 vector that is an estimate of $\underline{s}$; and
"$H$" denotes a conjugate transpose.

The covariance matrix $\underline{P}$ may be given as $\underline{P} = E[(\underline{s} - \hat{\underline{s}}) \cdot (\underline{s} - \hat{\underline{s}})^H]$, where $E[\ ]$ is an expectation operation. $\underline{P}$ is also a Hermitian matrix whose off-diagonal elements have the following properties $p_{j,i} = p_{i,j}^*$, where "*" denotes a complex conjugate.

As shown in equation (3), the MMSE spatial filter matrix $\underline{M}$ has a matrix inverse calculation. Direct calculation of the matrix inversion is computationally intensive. The MMSE spatial filter matrix may be more efficiently derived based on the embodiments described below, which indirectly calculate the matrix inversion with an iterative process instead of directly calculating the matrix inversion.

In a first embodiment of computing the MMSE spatial filter matrix $\underline{M}$, the Hermitian matrix $\underline{P}$ is computed based on the Riccati equation. Hermitian matrix $\underline{P}$ may be expressed as:

$$\underline{P} = (\sigma_n^2 \cdot \underline{I} + \underline{H}^H \cdot \underline{H})^{-1} = \left( \sigma_n^2 \cdot \underline{I} + \sum_{k=1}^{R} \underline{h}_k^H \cdot \underline{h}_k \right)^{-1} . \qquad\qquad \text{Eq (4)}$$

A T×T Hermitian matrix $\underline{P}_i$, may be defined as:

$$\begin{aligned} \underline{P}_i \ &= \left( \sigma_n^2 \cdot \underline{I} + \sum_{k=1}^{i} \underline{h}_k^H \cdot \underline{h}_k \right)^{-1} , \\ &= \left( \sigma_n^2 \cdot \underline{I} + \sum_{k=1}^{i-1} \underline{h}_k^H \cdot \underline{h}_k + \underline{h}_i^H \cdot \underline{h}_i \right)^{-1} , \qquad\qquad \text{Eq (5)} \\ &= ( \underline{P}_{i-1}^{-1} + \underline{h}_i^H \cdot \underline{h}_i )^{-1} , \end{aligned}$$

The matrix inversion lemma may be applied to equation (5) to obtain the following:

$$\underline{P}_i = \underline{P}_{i-1} - \frac{\underline{P}_{i-1} \cdot \underline{h}_i^H \cdot \underline{h}_i \cdot \underline{P}_{i-1}}{r_i} \quad \text{and} \quad r_i = 1 + \underline{h}_i \cdot \underline{P}_{i-1} \cdot \underline{h}_i^H , \qquad \text{Eq (6)}$$

where $r_i$ is a real-valued scalar. Equation (6) is referred to as the Riccati equation. Matrix $\underline{P}_i$ may be initialized as $\underline{P}_0 = \dfrac{1}{\sigma_n^2} \cdot \underline{I}$. After performing R iterations of equation (6), for $i = 1, ..., R$ , matrix $\underline{P}_R$ is provided as matrix $\underline{P}$, or $\underline{P} = \underline{P}_R$.

Equation (6) may be factored to obtain the following:

$$\underline{P}_i = \underline{P}_{i-1} - \frac{\underline{P}_{i-1} \cdot \underline{h}_i^H \cdot \underline{h}_i \cdot \underline{P}_{i-1}}{r_i} \quad \text{and} \quad r_i = \sigma_n^2 + \underline{h}_i \cdot \underline{P}_{i-1} \cdot \underline{h}_i^H , \qquad \text{Eq (7)}$$

where matrix $\underline{P}_i$ is initialized as $\underline{P}_0 = \underline{I}$ and matrix $\underline{P}$ is derived as $\underline{P} = \dfrac{1}{\sigma_n^2} \cdot \underline{P}_R$. Equations (6) and (7) are different forms of a solution to equation (5). For simplicity, the same variables $\underline{P}_i$ and $r_i$ are used for both equations. (6) and (7) even though these variables have different values in the two equations. The final results from equations (6) and (7), i.e., $\underline{P}_R$ for equation (6) and $\dfrac{1}{\sigma_n^2} \cdot \underline{P}_R$ for equation (7), are equivalent. However, the calculations for the first iteration of equation (7) are simplified because $\underline{P}_0$ is an identity matrix.

Each iteration of equation (7) may be performed as follows:

$$\underline{a}_i = \underline{h}_i \cdot \underline{P}_{i-1}\ , \qquad\qquad\qquad\qquad \text{Eq (8a)}$$

$$r_i = \sigma_n^2 + \underline{a}_i \cdot \underline{h}_i^H\ , \qquad\qquad\qquad\qquad \text{Eq (8b)}$$

$$\underline{C}_i = \underline{a}_i^H \cdot \underline{a}_i\ , \ \text{ and} \qquad\qquad\qquad\qquad \text{Eq (8c)}$$

$$\underline{P}_i = \underline{P}_{i-1} - r_i^{-1} \cdot \underline{C}_i\ , \qquad\qquad\qquad\qquad \text{Eq (8d)}$$

where $\underline{a}_i$ is a $1{\times}T$ intermediate row vector of complex-valued elements; and
$\underline{C}_i$ is a $T{\times}T$ intermediate Hermitian matrix.

In equation set (8), the sequence of operations is structured for efficient computation by hardware. Scalar $r_i$ is computed before matrix $\underline{C}_i$. The division by $r_i$ in equation (7) is achieved with an inversion and a multiply. The inversion of $r_i$ may be performed in parallel with the computation of $\underline{C}_i$. The inversion of $r_i$ may be achieved with a shifter to normalize $r_i$ and a look-up table to produce an inverted $r_i$ value. The normalization of $r_i$ may be compensated for in the multiplication with $\underline{C}_i$.

Matrix $\underline{P}_i$ is initialized as a Hermitian matrix, or $\underline{P}_0 = \underline{I}$, and remains Hermitian through all of the iterations. Hence, only the upper (or lower) diagonal matrix needs to be calculated for each iteration. After R iterations are completed, matrix $\underline{P}$ is obtained $\underline{P} = \dfrac{1}{\sigma_n^2} \cdot \underline{P}_R$. as The MMSE spatial filter matrix may then be computed as follows:

$$\underline{M} = \underline{P} \cdot \underline{H}^H = \dfrac{1}{\sigma_n^2} \cdot \underline{P}_R \cdot \underline{H}^H\ . \qquad\qquad\qquad\qquad \text{Eq (9)}$$

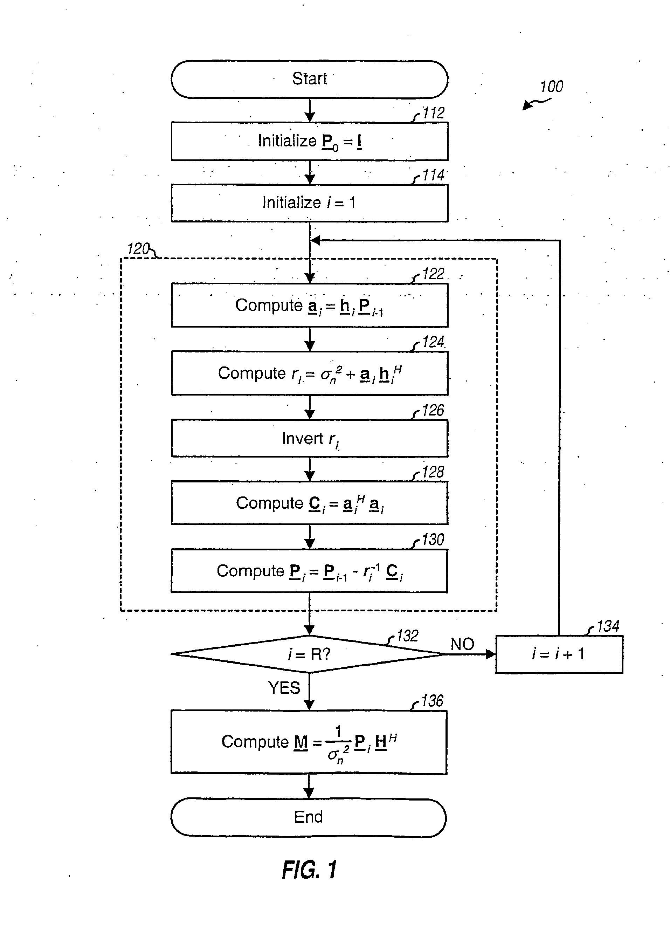

**FIG. 1** shows a process 100 for computing the MMSE spatial filter matrix $\underline{M}$ based on the first embodiment. Matrix $\underline{P}_i$ is initialized as $\underline{P}_0 = \underline{I}$ (block 112), and index $i$ used to denote the iteration number is initialized as $i = 1$ (block 114). R iterations of the Riccati equation are then performed.

Each iteration of the Riccati equation is performed by block 120. For the $i$-th iteration, the intermediate row vector $\underline{a}_i$ is computed based on the channel response row vector $\underline{h}_i$ and the Hermitian matrix $\underline{P}_{i-1}$ from the prior iteration, as shown in equation (8a) (block 122). The scalar $r_i$ is computed based on the noise variance $\sigma_n^2$; the intermediate row vector $\underline{a}_i$, and the channel response row vector $\underline{h}_i$, as shown in equation (8b) (block 124). Scalar $r_i$ is then inverted (block 126). Intermediate matrix $\underline{C}_i$ is computed based on the intermediate row vector $\underline{a}_i$, as shown in equation (8c) (block 128). Matrix $\underline{P}_i$ is then updated based on the inverted scalar $r_i$ and the intermediate matrix $\underline{C}_i$, as shown in equation (8d) (block 130).

A determination is then made whether all R iterations have been performed (block 132). If the answer is 'No', then index $i$ is incremented (block 134), and the process returns to block 122 to perform another iteration. Otherwise, if all R iterations have been performed, then the MMSE spatial filter matrix $\underline{M}$ is computed based on the Hermitian matrix $\underline{P}_R$ for the last iteration, the channel response matrix $\underline{H}$, and the noise variance $\sigma_n^2$, , as shown in equation (9) (block 136). Matrix $\underline{M}$ may then be used for receiver spatial processing as shown in equation (3).

In a second embodiment of computing the MMSE spatial filter matrix $\underline{M}$, the Hermitian matrix $\underline{P}$ is determined by deriving the square root of $\underline{P}$, which is $\underline{P}^{1/2}$, based on an iterative procedure. The receiver spatial processing in equation (3) may be expressed as:

$$\underline{\hat{s}} = (\sigma_n^2 \cdot \underline{I} + \underline{H}^H \cdot \underline{H})^{-1} \cdot \underline{H}^H \cdot \underline{r} = \left( [\underline{H}^H \quad \sigma_n \cdot \underline{I}] \cdot \begin{bmatrix} \underline{H} \\ \sigma_n \cdot \underline{I} \end{bmatrix} \right)^{-1} [\underline{H}^H \quad \sigma_n \cdot \underline{I}] \cdot \begin{bmatrix} \underline{r} \\ \underline{0}_{T\times1} \end{bmatrix},$$

$$= (\underline{U}^H \cdot \underline{U})^{-1} \cdot \underline{U}^H \cdot \begin{bmatrix} \underline{r} \\ \underline{0}_{T\times1} \end{bmatrix} = \underline{U}^p \cdot \begin{bmatrix} \underline{r} \\ \underline{0}_{T\times1} \end{bmatrix}, \qquad \text{Eq (10)}$$

$$= \underline{H}_{\sigma_n}^p \cdot \underline{r},$$

where $\underline{U} = \begin{bmatrix} \underline{H} \\ \sigma_n \cdot \underline{I} \end{bmatrix}$ is a (R+T)×T augmented channel matrix;

$\underline{U}^p$ is a T×(R+T) pseudo-inverse matrix obtained from a Moore-Penrose inverse or a pseudo-inverse operation on $\underline{U}$, or $\underline{U}^p = (\underline{U}^H \cdot \underline{U})^{-1} \cdot \underline{U}^H$;

$\underline{0}_{T\times1}$ is a T×1 vector of all zeros; and

$\underline{H}_{\sigma_n}^p$ is a T×R sub-matrix containing the first R columns of $\underline{U}^p$.

QR decomposition may be performed on the augmented channel matrix, as follows:

$$\begin{bmatrix} \underline{H} \\ \sigma_n \cdot \underline{I} \end{bmatrix} = \underline{Q} \cdot \underline{R} = \begin{bmatrix} \underline{B} \\ \underline{Q}_2 \end{bmatrix} \cdot \underline{R}, \qquad \text{Eq (11)}$$

where $\underline{Q}$ is a (R + T)×T matrix with orthonormal columns;
$\underline{R}$ is a T×T matrix that is non-singular;
$\underline{B}$ is an R×T matrix containing the first R rows of $\underline{Q}$; and
$\underline{Q}_2$ is a T×T matrix containing the last T rows of $\underline{Q}$.

The QR decomposition in equation (11) decomposes the augmented channel matrix into an orthonormal matrix $\underline{Q}$ and a non-singular matrix $\underline{R}$. An orthonormal matrix $\underline{Q}$ has the following property: $\underline{Q}^H \cdot \underline{Q} = \underline{I}$, which means that the columns of the orthonormal matrix are orthogonal to one another and each column has unit power. A non-singular matrix is a matrix that an inverse can be computed for.

The Hermitian matrix $\underline{P}$ may then be expressed as:

$$\underline{P} = (\sigma_n^2 \cdot \underline{I} + \underline{H}^H \cdot \underline{H})^{-1} = \left( [\underline{H}^H \quad \sigma_n \cdot \underline{I}] \begin{bmatrix} \underline{H} \\ \sigma_n \cdot \underline{I} \end{bmatrix} \right)^{-1},$$

$$= ((\underline{Q} \cdot \underline{R})^H \cdot \underline{Q} \cdot \underline{R})^{-1} = (\underline{R}^H \cdot \underline{Q}^H \cdot \underline{Q} \cdot \underline{R})^{-1}, \qquad \text{Eq (12)}$$

$$= (\underline{R}^H \cdot \underline{R})^{-1} = \underline{R}^{-1} \cdot \underline{R}^{-H} = \underline{P}^{1/2} \cdot \underline{P}^{H/2}.$$

$\underline{R}$ is the Cholesky factorization or matrix square root of $\underline{P}^{-1}$. Hence, $\underline{P}^{1/2}$ is equal to $\underline{R}^{-1}$ and is called the square-root of $\underline{P}$.

The pseudo-inverse matrix in equation (10) may then be expressed as:

$$\underline{U}^p = \underline{P} \cdot [\underline{H}^H \quad \sigma_n \cdot \underline{I}] = (\underline{R}^{-1} \cdot \underline{R}^{-H}) \cdot (\underline{R}^H \cdot \underline{Q}^H) = \underline{R}^{-1} \cdot \underline{Q}^H = \underline{P}^{1/2} \cdot \begin{bmatrix} \underline{B} \\ \underline{Q}_2 \end{bmatrix}^H. \quad \text{Eq (13)}$$

Sub-matrix $\underline{H}_{\sigma_n}^p$ ,, which is also the MMSE spatial filter matrix, may then be expressed as:

$$\underline{H}_{\sigma_n}^p = \underline{M} = \underline{P}^{1/2} \cdot \underline{B}^H. \qquad \text{Eq (14)}$$

Equation (10) may then be expressed as:

$$\hat{\underline{s}} = \underline{H}_{\sigma_n}^p \cdot \underline{r} = \underline{P}^{1/2} \cdot \underline{B}^H \cdot \underline{r} = \underline{M} \cdot \underline{r}. \qquad \text{Eq (15)}$$

Matrices $\underline{P}^{1/2}$ and $\underline{B}$ may be computed iteratively as follows:

$$\underline{Y}_i \cdot \underline{\Theta}_i = \underline{Z}_i, \quad \text{or} \qquad \text{Eq (16)}$$

$$\begin{bmatrix} 1 & \underline{h}_i \cdot \underline{P}_{i-1}^{1/2} \\ \underline{0}_{T \times 1} & \underline{P}_{i-1}^{1/2} \\ -\underline{e}_i & \underline{B}_{i-1} \end{bmatrix} \cdot \underline{\Theta}_i = \begin{bmatrix} r_i^{1/2} & \underline{0}_{1 \times T} \\ \underline{k}_i & \underline{P}_i^{1/2} \\ \underline{l}_i & \underline{B}_i \end{bmatrix}, \qquad \text{Eq (17)}$$

where $\underline{Y}_i$ is a $(T+R+1) \times (T+1)$ matrix containing elements derived based on $\underline{P}_{i-1}^{1/2}$ ,, $\underline{B}_{i-1}$ and $\underline{h}_i$;
$\Theta_i$ is a $(T+1) \times (T+1)$ unitary transformation matrix;

$\underline{Z}_i$ is a $(T+R+1)\times(T+1)$ transformed matrix containing elements for $\underline{\mathbf{P}}_i^{1/2}$,

$\underline{B}_i$ and $r_i$;

$\underline{e}_i$ is an $R\times1$ vector with one (1.0) as the $i$-th element and zeros elsewhere; and

$\underline{k}_i$ is a $T\times1$ vector and $\underline{l}_i$ is an $R\times1$ vector, both of which are non-essential.

Matrices $\underline{P}^{1/2}$ and $\underline{B}$ are initialized as $\underline{\mathbf{P}}_0^{1/2} = \frac{1}{\sigma_n}\cdot\underline{I}$ and $\underline{B}_0 = \underline{0}_{R\times T}$.

The transformation in equation (17) may be performed iteratively, as described below. For clarity, each iteration of equation (17) is called an outer iteration. R outer iterations of equation (17) are performed for the R channel response row vectors $\underline{h}_i$, for $i = 1,..., R$. For each outer iteration, the unitary transformation matrix $\Theta_i$ in equation (17) results in the transformed matrix $\underline{Z}_i$ containing all zeros in the first row except for the first element. The first column of the transformed matrix $\underline{Z}_i$ contains $r_i^{1/2}$, $\underline{k}_i$, and $\underline{l}_i$. The last T columns of $\underline{Z}_i$ contain updated $\underline{\mathbf{P}}_i^{1/2}$ and $\underline{B}_i$. The first column of $\underline{Z}_i$ does not need to be calculated since only $\underline{\mathbf{P}}_i^{1/2}$ and $\underline{B}_i$ are used in the next iteration. $\underline{\mathbf{P}}_i^{1/2}$ is an upper triangular matrix.

After R outer iterations are completed, $\underline{\mathbf{P}}_R^{1/2}$ is provided as $\underline{P}^{1/2}$, and $\underline{B}_R$ is provided as $\underline{B}$. The MMSE spatial filter matrix $\underline{M}$ may then be computed as based on $\underline{P}^{1/2}$ and $\underline{B}$, as shown in equation (14).

For each outer iteration $i$, the transformation in equation (17) may be performed by successively zeroing out one element in the first row of $\underline{Y}_i$ at a time with a $2\times2$ Givens rotation. T inner iterations of the Givens rotation may be performed to zero out the last T elements in the first row of $\underline{Y}_i$.

For each outer iteration $i$, a matrix $\underline{Y}_{i,j}$ may be initialized as $\underline{Y}_{i,j} = \underline{Y}_i$. For each inner iteration $j$, for $j = 1,...,T$, of outer iteration $i$, a $(T + R + 1)\times2$ sub-matrix $\underline{Y}'_{i,j}$ containing the first and $(j+1)$ -th columns of $\underline{Y}_{i,j}$ is initially formed. The Givens rotation is then performed on sub-matrix $\underline{Y}'_{i,j}$ to generate a $(T+R+1)\times2$ sub-matrix $\underline{Y}''_{i,j}$ containing a zero for the second element in the first row. The Givens rotation may be expressed as:

$$\underline{\mathbf{Y}}''_{i,j} = \underline{\mathbf{Y}}'_{i,j} \cdot \underline{\mathbf{G}}_{i,j} \text{ ,} \qquad\qquad \text{Eq (18)}$$

where $\underline{G}_{i,j}$ is a $2\times2$ Givens rotation matrix for the $j$-th inner iteration of the $i$-th outer iteration and is described below. Matrix $\underline{Y}_{i,j+1}$ is then formed by first setting $\underline{Y}_{i,j+1} = \underline{Y}_{i,j}$, then replacing the first column of $\underline{Y}_{i,j+1}$ with the first column of $\underline{Y}''_{i,j}$, and then replacing the $(j+1)$-th column of $\underline{Y}_{i,j+1}$ with the second column of $\underline{Y}''_{i,j}$. The Givens rotation thus modifies only two columns of $\underline{Y}_{i,j}$ in the $j$-th inner iteration to produce $\underline{Y}_{i,j+1}$ for the next inner iteration. The Givens rotation may be performed in-place on two columns of $\underline{Y}_i$ for each inner iteration, so that intermediate matrices $\underline{Y}_{i,j}$, $\underline{Y}'_{i,j}$, $\underline{Y}''_{i,j}$ and $\underline{Y}_{i,j+1}$ are not needed and are described above for clarity.

For the $j$-th inner iteration of the $i$-th outer iteration, the Givens rotation matrix $\underline{G}_{i,j}$ is determined based on the first element (which is always a real value) and the $(j+1)$-th element in the first row of $\underline{Y}_{i,j}$. The first element may be denoted as $\alpha$, and the $(j+1)$-th element may be denoted as $b\cdot e^{j\theta}$. The Givens rotation matrix $\underline{G}_{i,j}$ may then be derived as follows:

$$\underline{\mathbf{G}}_{i,j} = \begin{bmatrix} c & -s \\ s\cdot e^{-j\theta} & c\cdot e^{-j\theta} \end{bmatrix} = \begin{bmatrix} 1 & 0 \\ 0 & e^{-j\theta} \end{bmatrix} \cdot \begin{bmatrix} c & -s \\ s & c \end{bmatrix} \text{ ,} \qquad\qquad \text{Eq (19)}$$

where $c = \dfrac{a}{\sqrt{a^2+b^2}}$ and $s = \dfrac{b}{\sqrt{a^2+b^2}}$ for equation (19).

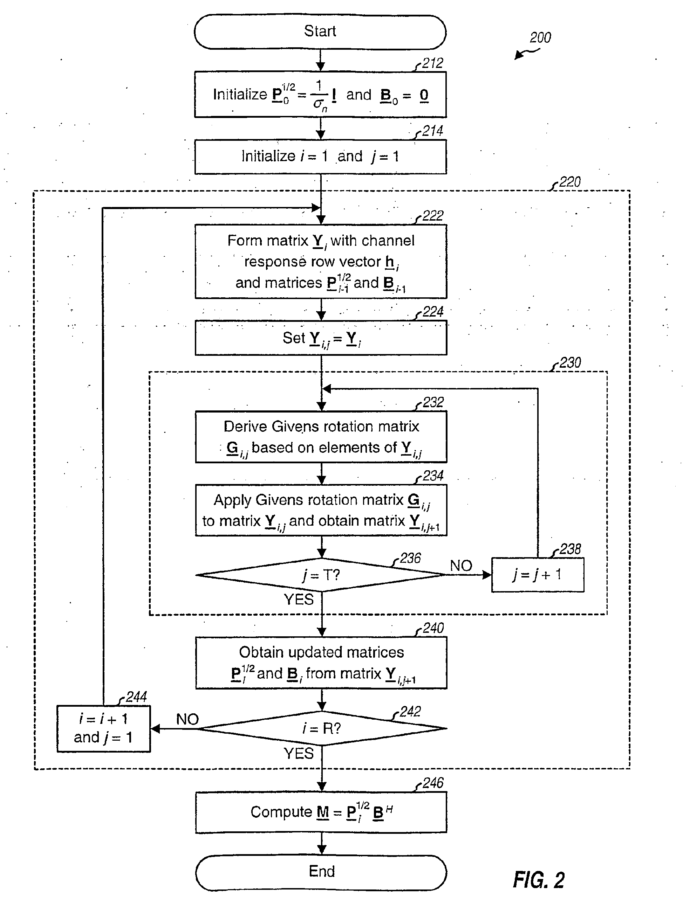

**FIG. 2** shows a process 200 for computing the MMSE spatial filter matrix $\underline{M}$ based on the second embodiment.

Matrix $\underline{\mathbf{P}}_i^{1/2}$ is initialized as $\underline{\mathbf{P}}_0^{1/2} = \frac{1}{\sigma_n}\cdot\underline{\mathbf{I}}$, and matrix $\underline{B}_i$ is initialized as $\underline{B}_0 = \underline{0}$ (block 212). Index $i$ used to denote the outer iteration number is initialized as $i = 1$, and index $j$ used to denote the inner iteration number is initialized as $j = 1$ (block 214). R outer iterations of the unitary transformation in equation (17) are then performed (block 220).

For the $i$-th outer iteration, matrix $\underline{Y}_i$ is initially formed with the channel response row vector $\underline{h}_i$ and matrices $\underline{P}_{i-1}^{1/2}$ and $\underline{B}_{i-1}$, as shown in equation (17) (block 222). Matrix $\underline{Y}_i$ is then referred to as matrix $\underline{Y}_{i,j}$ for the inner iterations (block 224). T inner iterations of the Givens rotation are then performed on matrix $\underline{Y}_{i,j}$ (block 230).

For the $j$-th inner iteration, the Givens rotation matrix $\underline{G}_{i,j}$ is derived based on the first and $(j+1)$-th elements in the first row of $\underline{Y}_{i,j}$, as shown in equation (19) (block 232). The Givens rotation matrix $\underline{G}_{i,j}$ is then applied to the first and $(j+1)$-th columns of $\underline{Y}_{i,j}$ to obtain $\underline{Y}_{i,j+1}$, as shown in equation (18) (block 234). A determination is then made whether all T inner iterations have been performed (block 236). If the answer is 'No', then index $j$ is incremented (block 238), and the process returns to block 232 to perform another inner iteration.

If all T inner iterations have been performed for the current outer iteration and the answer is 'Yes' for block 236, then the latest $\underline{Y}_{i,j+1}$ is equal to $\underline{Z}_i$ in equation (17). Updated matrices $\underline{P}_i^{1/2}$ and $\underline{B}_i$ are obtained from the latest $\underline{Y}_{i,j+1}$ (block 240). A determination is then made whether all R outer iterations have been performed (block 242). If the answer is 'No', then index $i$ is incremented, and index $j$ is reinitialized as $j=1$ (block 244). The process then returns to block 222 to perform another outer iteration with $\underline{P}_i^{1/2}$ and $\underline{B}_i$. Otherwise, if all R outer iterations have been performed and the answer is 'Yes' for block 242, then the MMSE spatial filter matrix $\underline{M}$ is computed based on $\underline{P}_i^{1/2}$ and $\underline{B}_i$, as shown in equation (14) (block 246). Matrix $\underline{M}$ may then be used for receiver spatial processing as shown in equation (15).

In a third embodiment of computing the MMSE spatial filter matrix $\underline{M}$, eigenvalue decomposition of $\underline{P}^{-1}$ is performed as follows:

$$\underline{P}^{-1} = \sigma_n^2 \cdot \underline{I} + \underline{H}^H \cdot \underline{H} = \underline{V} \cdot \underline{\Lambda} \cdot \underline{V}^H \; , \qquad \text{Eq (20)}$$

where $\underline{V}$ is a T$\times$T unitary matrix of eigenvectors; and
$\underline{\Lambda}$ is a T$\times$T diagonal matrix with real eigenvalues along the diagonal.

Eigenvalue decomposition of a 2$\times$2 Hermitian matrix $\underline{X}_{2\times2}$ may be achieved using various techniques. In an embodiment, eigenvalue decomposition of $\underline{X}_{2\times2}$ is achieved by performing a complex Jacobi rotation on $\underline{X}_{2\times2}$ to obtain a 2$\times$2 matrix $\underline{V}_{2\times2}$ of eigenvectors of $\underline{X}_{2\times2}$. The elements of $\underline{X}_{2\times2}$ and $\underline{V}_{2\times2}$ may be given as:

$$\underline{X}_{2\times2} = \begin{bmatrix} x_{1,1} & x_{1,2} \\ x_{2,1} & x_{2,2} \end{bmatrix} \quad \text{and} \quad \underline{V}_{2\times2} = \begin{bmatrix} v_{1,1} & v_{1,2} \\ v_{2,1} & v_{2,2} \end{bmatrix} . \qquad \text{Eq (21)}$$

The elements of $\underline{V}_{2\times2}$ may be computed directly from the elements of $\underline{X}_{2\times2}$, as follows:

$$r = \sqrt{(\mathrm{Re}\{x_{1,2}\})^2 + (\mathrm{Im}\{x_{1,2}\})^2} \; , \qquad \text{Eq (22a)}$$

$$c_1 = \frac{\mathrm{Re}\{x_{1,2}\}}{r} = \cos(\angle x_{1,2}) \; , \qquad \text{Eq (22b)}$$

$$s_1 = \frac{\mathrm{Im}\{x_{1,2}\}}{r} = \sin\left(\angle x_{1,2}\right),$$  Eq (22c)

$$g_1 = c_1 - js_1,$$  Eq (22d)

$$\tau = \frac{x_{2,2} - x_{1,1}}{2 \cdot r};$$  Eq (22e)

$$x = \sqrt{1 + \tau^2},$$  Eq (22f)

$$t = \frac{1}{|\tau| + x},$$  Eq (22g)

$$c = \frac{1}{\sqrt{1 + t^2}},$$  Eq (22h)

$$s = t \cdot c = \sqrt{1 - c^2};$$  Eq (22i)

$$\text{if } (x_{2,2} - x_{1,1}) < 0$$

$$\text{then } \underline{\mathbf{V}}_{2\times 2} = \begin{bmatrix} c & -s \\ g_1 \cdot s & g_1 \cdot c \end{bmatrix},$$  Eq (22j)

$$\text{else } \underline{\mathbf{V}}_{2\times 2} = \begin{bmatrix} s & c \\ g_1 \cdot c & -g_1 \cdot s \end{bmatrix}.$$  Eq (22k)

Eigenvalue decomposition of a T×T Hermitian matrix $\underline{\mathbf{X}}$ that is larger than 2×2 may be performed with an iterative process. This iterative process uses the Jacobi rotation repeatedly to zero out off-diagonal elements in $\underline{\mathbf{X}}$. For the iterative process, index $i$ denotes the iteration number and is initialized as $i$=1. $\underline{\mathbf{X}}$ is a T×T Hermitian matrix to be decomposed and is set as $\underline{\mathbf{X}} = \underline{\mathbf{P}}^{-1}$. Matrix $\underline{\mathbf{D}}_i$ is an approximation of diagonal matrix $\underline{\Lambda}$ in equation (20) and is initialized as $\underline{\mathbf{D}}_0 = \underline{\mathbf{X}}$. Matrix $\underline{\mathbf{V}}_i$ is an approximation of unitary matrix $\underline{\mathbf{V}}$ in equation (20) and is initialized as $\underline{\mathbf{V}}_0 = \mathbf{I}$.

A single iteration of the Jacobi rotation to update matrices $\underline{\mathbf{D}}_i$ and $\underline{\mathbf{V}}_i$ may be performed as follows. First, a 2×2 Hermitian matrix $\underline{\mathbf{D}}_{pq}$ is formed based on the current matrix $\underline{\mathbf{D}}_i$, as follows:

$$\underline{\mathbf{D}}_{pq} = \begin{bmatrix} d_{p,p} & d_{p,q} \\ d_{q,p} & d_{q,q} \end{bmatrix} , \qquad \text{Eq (23)}$$

where $d_{p,q}$ is the element at location $(p,q)$ in $\underline{\mathbf{D}}_j$, $p \in \{1,...,T\}$, $q \in \{1,...,T\}$, and $p \neq q$. $\underline{\mathbf{D}}_{pq}$ is a 2×2 submatrix of $\underline{\mathbf{D}}_j$, and the four elements of $\underline{\mathbf{D}}_{pq}$ are four elements at locations $(p,p)$, $(p,q)$, $(q, p)$ and $(q,q)$ in $\underline{\mathbf{D}}_j$. Indices $p$ and $q$ may be selected as described below.

Eigenvalue decomposition of $\underline{\mathbf{D}}_{pq}$ is then performed as shown in equation set (22) to obtain a 2×2 unitary matrix $\underline{\mathbf{V}}_{pq}$ of eigenvectors of $\underline{\mathbf{D}}_{pq}$. For the eigenvalue decomposition of $\underline{\mathbf{D}}_{pq}$, $\underline{\mathbf{X}}_{2\times 2}$ in equation (21) is replaced with $\underline{\mathbf{D}}_{pq}$, and $\underline{\mathbf{V}}_{2\times 2}$ from equation (22j) or (22k) is provided as $\underline{\mathbf{V}}_{pq}$.

A T×T complex Jacobi rotation matrix $\underline{\mathbf{T}}_{pq}$ is then formed with $\underline{\mathbf{V}}_{pq}$. $\underline{\mathbf{T}}_{pq}$ is an identity matrix with four elements at locations $(p,p)$, $(p,q)$, $(q,p)$ and $(q,q)$ replaced with elements $v_{1,1}$, $v_{1,2}$, $v_{2,1}$ and $v_{2,2}$, respectively, in $\underline{\mathbf{V}}_{pq}$.

Matrix $\underline{\mathbf{D}}_j$ is then updated as follows:

$$\underline{\mathbf{D}}_{i+1} = \underline{\mathbf{T}}_{pq}^{H} \cdot \underline{\mathbf{D}}_i \cdot \underline{\mathbf{T}}_{pq} . \qquad \text{Eq (24)}$$

Equation (24) zeros out two off-diagonal elements at locations $(p,q)$ and $(q,p)$ in $\underline{\mathbf{D}}_j$. The computation may alter the values of other off-diagonal elements in $\underline{\mathbf{D}}_j$.

Matrix $\underline{\mathbf{V}}_j$ is also updated as follows:

$$\underline{\mathbf{V}}_{i+1} = \underline{\mathbf{V}}_i \cdot \underline{\mathbf{T}}_{pq} . \qquad \text{Eq (25)}$$

$\underline{\mathbf{V}}_j$ may be viewed as a cumulative transformation matrix that contains all of the Jacobi rotation matrices $\underline{\mathbf{T}}_{pq}$ used on $\underline{\mathbf{D}}_j$.

Each iteration of the Jacobi rotation zeros out two off-diagonal elements of $\underline{\mathbf{D}}_j$. Multiple iterations of the Jacobi rotation may be performed for different values of indices $p$ and $q$ to zero out all of the off-diagonal elements of $\underline{\mathbf{D}}_j$. A single sweep across all possible values of indices $p$ and $q$ may be performer as follows. Index $p$ is stepped from 1 through T-1 in increments of one. For each value of $p$, index $q$ is stepped from $p + 1$ through T in increments of one. The Jacobi rotation is performed for each different combination of values for $p$ and $q$. Multiple sweeps may be performed until $\underline{\mathbf{D}}_j$ and $\underline{\mathbf{V}}_j$ are sufficiently accurate estimates of $\underline{\Lambda}$ and $\underline{\mathbf{V}}$, respectively.

Equation (20) may be rewritten as follows:

$$\underline{\mathbf{P}} = (\sigma_n^2 \cdot \underline{\mathbf{I}} + \underline{\mathbf{H}}^{H} \cdot \underline{\mathbf{H}})^{-1} = \underline{\mathbf{V}} \cdot \underline{\Lambda}^{-1} \cdot \underline{\mathbf{V}}^{H} , \qquad \text{Eq (26)}$$

where $\Lambda^{-1}$ is a diagonal matrix whose elements are the inverse of the corresponding elements in $\Lambda$. The eigenvalue decomposition of $\underline{\mathbf{X}} = \underline{\mathbf{P}}^{-1}$ provides estimates of $\underline{\Lambda}$ and $\underline{\mathbf{V}}$. $\Lambda$ may be inverted to obtain $\underline{\Lambda}^{-1}$.

The MMSE spatial filter matrix may then be computed as follows:

$$\underline{\mathbf{M}} = \underline{\mathbf{P}} \cdot \underline{\mathbf{H}}^{H} = \underline{\mathbf{V}} \cdot \underline{\Lambda}^{-1} \cdot \underline{\mathbf{V}}^{H} \cdot \underline{\mathbf{H}}^{H} . \qquad \text{Eq (27)}$$

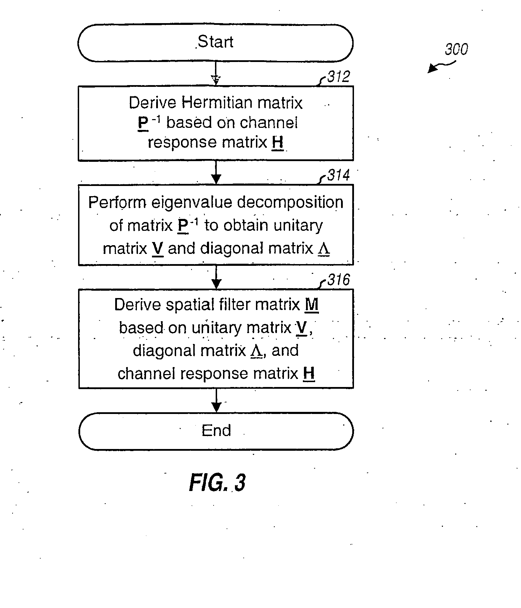

**FIG. 3** shows a process 300 for computing the MMSE spatial filter matrix $\underline{\mathbf{M}}$ based on the third embodiment. Hermitian matrix $\underline{\mathbf{P}}^{-1}$ is initially derived based on the channel response matrix $\underline{\mathbf{H}}$, as shown in equation (20) (block 312). Eigenvalue decomposition of $\underline{\mathbf{P}}^{-1}$ is then performed to obtain unitary matrix $\underline{\mathbf{V}}$ and diagonal matrix $\underline{\Lambda}$, as also shown in equation (20) (block 314). The eigenvalue decomposition may be iteratively performed with a number of Jacobi rotations, as described above. The MMSE spatial filter matrix $\underline{\mathbf{M}}$ is then derived based on the unitary matrix $\underline{\mathbf{V}}$, the diagonal matrix

$\underline{\Lambda}$, and the channel response matrix $\underline{H}$, as shown in equation (27) (block 316).

The MMSE spatial filter matrix $\underline{M}$ derived based on each of the embodiments described above is a biased MMSE solution. The biased spatial filter matrix $\underline{M}$ may be scaled by a diagonal matrix $\underline{D}_{mmse}$ to obtain an unbiased MMSE spatial filter matrix $\underline{M}_{mmse}$. Matrix $\underline{D}_{mmse}$ may be derived as $\underline{D}_{mmse}=[\text{diag}[\underline{M}\cdot\underline{H}]]^{-1}$, where diag $[\underline{M}\cdot\underline{H}]$ is a diagonal matrix containing the diagonal elements of $\underline{M}\cdot\underline{H}$.

The computation described above may also be used to derive spatial filter matrices for a zero-forcing (ZF) technique (which is also called a channel correlation matrix inversion (CCMI) technique), a maximal ratio combining (MRC) technique, and so on. For example, the receiving station may perform zero-forcing and MRC receiver spatial.processing, as follows:

$$\hat{\underline{s}}_{zf} = (\underline{H}^H \cdot \underline{H})^{-1} \cdot \underline{H}^H \cdot \underline{r} = \underline{P}_{zf} \cdot \underline{H}^H \cdot \underline{r} = \underline{M}_{zf} \cdot \underline{r} \,, \qquad\qquad \text{Eq (28)}$$

$$\hat{\underline{s}}_{mrc} = [\text{diag}\,(\underline{H}^H \cdot \underline{H})^{-1}] \cdot \underline{H}^H \cdot \underline{r} = [\text{diag}\,(\underline{P}_{zf})] \cdot \underline{H}^H \cdot \underline{r} = \underline{M}_{mrc} \cdot \underline{r} \,, \qquad\qquad \text{Eq (29)}$$

where $\underline{M}_{zf}$ is a T×R zero-forcing spatial filter matrix;

$\underline{M}_{mrc}$ is a T×R MRC spatial filter matrix;

$\underline{P}_{zf} = (\underline{H}^{H}\cdot\underline{H})^{-1}$ is a T×T Hermitian matrix; and

$[\text{diag}(\underline{P}_{zf})]$ is a T×T diagonal matrix containing the diagonal elements of $\underline{P}_{zf}$

A matrix inversion is needed to compute $\underline{P}_{zf}$ directly. $\underline{P}_{zf}$ may be computed using the embodiments described above for the MMSE spatial filter matrix.

The description above assumes that T modulation symbols are sent simultaneously from T transmit antennas without any spatial processing. The transmitting station may perform spatial processing prior to transmission, as follows:

$$\underline{x} = \underline{W} \cdot \underline{s} \,, \qquad\qquad \text{Eq (30)}$$

where $\underline{x}$ is a T×1 vector with T transmit symbols to be sent from the T transmit antennas; and

$\underline{W}$ is a T×S transmit matrix.

Transmit matrix $\underline{W}$ may be (1) a matrix of right singular vectors obtained by performing singular value decomposition of $\underline{H}$, (2) a matrix of eigenvectors obtained by performing eigenvalue decomposition of $\underline{H}^{H}\cdot\underline{H}$, or (3) a steering matrix selected to spatially spread the modulation symbols across the S spatial channels of the MIMO channel. An effective channel response matrix $\underline{H}_{eff}$ observed by the modulation symbols may then be given as $\underline{H}_{eff}=\underline{H}\cdot\underline{W}$. The computation described above may be performed based on $\underline{H}_{eff}$ instead of $\underline{H}$.

For clarity, the description above is for a single-carrier MIMO system with a single subband. For a multi-carrier MIMO system, a channel response matrix $\underline{H}(k)$ may be obtained for each subband $k$ of interest. A spatial filter matrix $\underline{M}(k)$ may then be derived for each subband $k$ based on the channel response matrix $\underline{H}(k)$ for that subband.

The computation described above for the spatial filter matrix may be performed using various types of processors such as a floating-point processor, a fixed-point processor, a Coordinate Rotational Digital Computer (NORDIC) processor, a look-up table, and so on, or a combination thereof. A CORDIC processor implements an iterative algorithm that allows for fast hardware calculation of trigonometric functions such as sine, cosine, magnitude, and phase using simple shift and add/subtract hardware. A CORDIC processor may iteratively compute each of variables r, $c_1$ and $s_1$ in equation set (22), with more iterations producing higher accuracy for the variable.

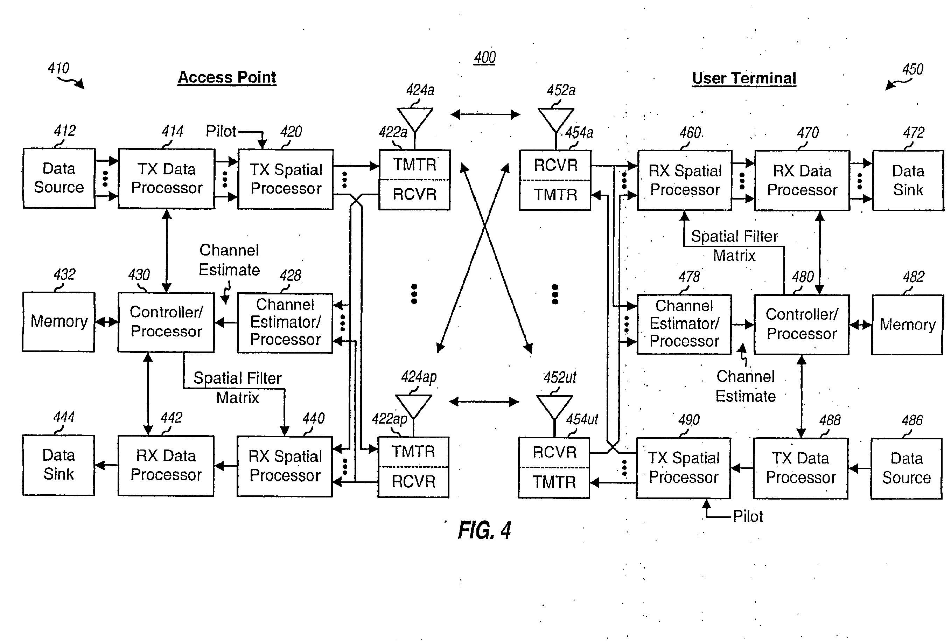

**FIG. 4** shows a block diagram of an access point 410 and a user terminal 450 in a MIMO system 400. Access point 410 is equipped with $N_{ap}$ antennas and user terminal 450 is equipped with $N_{ut}$ antennas, where $N_{ap}>1$ and $N_{ut}>1$. On the downlink, at access point 410, a transmit (TX) data processor 414 receives traffic data from a data source 412 and other data from a controller/processor 430. TX data processor 414 formats, encodes, interleaves, and modulates the data and generates data symbols, which are modulation symbols for data. A TX spatial processor 420 multiplexes the data symbols with pilot symbols, performs spatial processing with transmit matrix $\underline{W}$ if applicable, and provides $N_{ap}$ streams of transmit symbols. Each transmitter unit (TMTR) 422 processes a respective transmit symbol stream and generates a downlink modulated signal. $N_{ap}$ downlink modulated signals from transmitter units 422a through 422ap are transmitted from antennas 424a through 424ap, respectively.

At user terminal 450, $N_{ut}$ antennas 452a through 452ut receive the transmitted downlink modulated signals, and each antenna provides a received signal to a respective receiver unit (RCVR) 454. Each receiver unit 454 performs processing complementary to the processing performed by transmitter units 422 and provides received pilot symbols and received data symbols. A channel estimator/processor 478 processes the received pilot symbols and provides an estimate of the downlink channel response $\underline{H}_{dn}$. A processor 480 derives a downlink spatial filter matrix $\underline{M}_{dn}$ based on $\underline{H}_{dn}$ and using any of the embodiments described above. A receive (RX) spatial processor 460 performs receiver spatial processing (or spatial matched filtering) on the received data symbols from all $N_{ut}$ receiver units 454a through 454ut with the downlink spatial filter matrix $\underline{M}_{dn}$ and provides detected data symbols, which are estimates of the data symbols transmitted by access point 410. An RX data processor 470 processes (e.g., symbol demaps, deinterleaves, and decodes) the detected data symbols and provides decoded data to a data sink 472 and/or controller 480.

The processing for the uplink may be the same or different from the processing for the downlink. Data from a data source 486 and signaling from controller 480 are processed (e.g., encoded, interleaved, and modulated) by a TX data processor 488, multiplexed with pilot symbols, and possibly spatially processed by TX spatial processor 490. The transmit symbols from TX spatial processor 490 are further processed by transmitter units 454a through 454ut to generate $N_{ut}$ uplink modulated signals, which are transmitted via antennas 452a through 452ut.

At access point 410, the uplink modulated signals are received by antennas 424a through 424ap and processed by receiver units 422a through 422ap to generate received pilot symbols and received data symbols for the uplink transmission. A channel estimator/processor 428 processes the received pilot symbols and provides an estimate of the uplink channel response $\underline{H}_{up}$. Processor 430 derives an uplink spatial filter matrix $\underline{M}_{up}$ based on $\underline{H}_{up}$ and using any of the embodiments described above. An RX spatial processor 440 performs receiver spatial processing on the received data symbols with the uplink spatial filter matrix $\underline{M}_{up}$ and provides detected data symbols. An RX data processor 442 further processes the detected data symbols and provides decoded data to a data sink 444 and/or controller 430.

Controllers 430 and 480 control the operation at access point 410 and user terminal 450, respectively. Memory units 432 and 482 store data and program codes used by controllers 430 and 480, respectively.

The blocks in FIGS. 1 through 4 represent functional blocks that may be embodied in hardware (one or more devices), firmware (one or more devices), software (one or more modules), or combinations thereof. For example, the filter weight computation techniques described herein may be implemented in hardware, firmware, software, or a combination thereof. For a hardware implementation, the processing units used to compute the filter weights may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices,' other electronic units designed to perform the functions described herein, or a combination thereof. The various processors at access point 410 in FIG. 4 may also be implemented with one or more hardware processors. Likewise, the various processors at user terminal 450 may be implemented with one or more hardware processors.

For a firmware or software implementation, the filter weight computation techniques may be implemented with modules (e.g., procedures, functions, and so on) that perform the functions described herein. The software codes may be stored in a memory unit (e.g., memory unit 432 or 482 in FIG. 4) and executed by a processor (e.g., processor 430 or 480). The memory unit may be implemented within the processor or external to the processor.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## SUMMARY OF THE INVENTION

1. An apparatus comprising:

a first processor operative to derive a channel response matrix; and
a second processor operative to derive a first matrix iteratively based on the channel response matrix and to derive a spatial filter matrix based on the first matrix and the channel response matrix, wherein the second processor indirectly calculates a matrix inversion by deriving the first matrix iteratively.

2. The apparatus of 1, wherein the second processor is operative to initialize the first matrix to an identity matrix.

3. The apparatus of 1, wherein the second processor is operative, for each of a plurality of iterations, to derive an intermediate row vector based on the first matrix and a channel response row vector corresponding to a row of the channel response matrix, to derive a scalar based on the intermediate row vector and the channel response row vector, to derive an intermediate matrix based on the intermediate row vector, and to update the first matrix based on the scalar and the intermediate matrix.

4. The apparatus of 1, wherein the first matrix is for a minimum mean square error (MMSE) spatial filter matrix.

5. The apparatus of 1, wherein the second processor is operative to derive the first matrix based on the following equation:

$$\underline{\mathbf{P}}_i = \underline{\mathbf{P}}_{i-1} - \frac{\underline{\mathbf{P}}_{i-1} \cdot \underline{\mathbf{h}}_i^H \cdot \underline{\mathbf{h}}_i \cdot \underline{\mathbf{P}}_{i-1}}{r_i} \ ,$$

where $\underline{\mathbf{P}}_i$ is the first matrix for $i$-th iteration, $\underline{\mathbf{h}}_i$ is $i$-th row of the channel response matrix, $r_i$ is a scalar derived based on $\underline{\mathbf{h}}_i$ and $\underline{\mathbf{P}}_{i-1}$, and "$H$" is a conjugate transpose.

6. The apparatus of 1, wherein the second processor is operative to derive the first matrix based on the following equations:

$$\underline{\mathbf{a}}_i = \underline{\mathbf{h}}_i \cdot \underline{\mathbf{P}}_{i-1} \ ,$$

$$r_i = \sigma_n^2 + \underline{\mathbf{a}}_i \cdot \underline{\mathbf{h}}_i^H \ ,$$

$$\underline{\mathbf{C}}_i = \underline{\mathbf{a}}_i^H \cdot \underline{\mathbf{a}}_i \ ,$$

and

$$\underline{\mathbf{P}}_i = \underline{\mathbf{P}}_{i-1} - r_i^{-1} \cdot \underline{\mathbf{C}}_i \ ,$$

where $\underline{\mathbf{P}}_i$ is the first matrix for $i$-th iteration, $\underline{\mathbf{h}}_i$ is $i$-th row of the channel response matrix, $\underline{\mathbf{a}}_i$ is an intermediate row vector for the $i$-th iteration, $\underline{\mathbf{C}}_i$ is an intermediate matrix for the $i$-th iteration, $r_i$ is a scalar for the $i$-th iteration, $\sigma_n^2$ is noise variance, and "$H$" is a conjugate transpose.

7. The apparatus of 1, wherein the second processor is operative to derive the spatial filter matrix based on the following equation:

$$\underline{\mathbf{M}} = \underline{\mathbf{P}} \cdot \underline{\mathbf{H}}^H \ ,$$

where $\underline{M}$ is the spatial filter matrix, $\underline{\mathbf{P}}$ is the first matrix, $\underline{\mathbf{H}}$ is the channel response matrix, and "$H$" is a conjugate transpose.

8. A method of deriving a spatial filter matrix, comprising:

deriving a first matrix iteratively based on a channel response matrix, wherein a matrix inversion is indirectly calculated by deriving the first matrix iteratively; and
deriving the spatial filter matrix based on the first matrix and the channel response matrix.

9. The method of 8, further comprising:

initializing the first matrix to an identity matrix.

10. The method of 8, wherein the deriving the first matrix comprises, for each of a plurality of iterations,

deriving an intermediate row vector based on the first matrix and a channel response row vector corresponding to a row of the channel response matrix,
deriving a scalar based on the intermediate row vector and the channel response row vector,
deriving an intermediate matrix based on the intermediate row vector, and updating the first matrix based on the scalar and the intermediate matrix.

11. An apparatus comprising:

means for deriving a first matrix iteratively based on a channel response matrix, wherein a matrix inversion is indirectly calculated by deriving the first matrix iteratively; and
means for deriving a spatial filter matrix based on the first matrix and the channel response matrix.

12. The apparatus of 11, further comprising:

means for initializing the first matrix to an identity matrix.

13. The apparatus of 11, wherein the means for deriving the first matrix comprises, for each of a plurality of iterations,

means for deriving an intermediate row vector based on the first matrix and a channel response row vector corresponding to a row of the channel response matrix,
means for deriving a scalar based on the intermediate row vector and the channel response row vector,
means for deriving an intermediate matrix based on the intermediate row vector, and
means for updating the first matrix based on the scalar and the intermediate matrix.

14. An apparatus comprising:

a first processor operative to derive a channel response matrix; and
a second processor operative to perform a plurality of rotations to iteratively obtain a first matrix and a second matrix for a pseudo-inverse matrix of the channel response matrix and to derive a spatial filter matrix based on the first and second matrices.

15. The apparatus of 14, wherein the second processor is operative to initialize the first matrix to an identity matrix and to initialize the second matrix with all zeros.

16. The apparatus of 14, wherein the second processor is operative, for each of a plurality of rows of the channel response matrix, to form an intermediate matrix based on the first matrix, the second matrix, and a channel response row vector, and to perform at least two rotations on the intermediate matrix to zero out at least two elements of the intermediate matrix.

17. The apparatus of 14, wherein the second processor is operative to perform a Givens rotation for each of the plurality of rotations to zero out one element of an intermediate matrix containing the first and second matrices.

18. The apparatus of 14, wherein the pseudo-inverse matrix is for a minimum mean square error (MMSE) spatial filter matrix.

19. The apparatus of 14, wherein the second processor is operative to perform at least two rotations for each of a plurality of iterations based on the following equation:

$$\begin{bmatrix} 1 & \underline{\mathbf{h}}_i \cdot \underline{\mathbf{P}}_{i-1}^{1/2} \\ \underline{\mathbf{0}} & \underline{\mathbf{P}}_{i-1}^{1/2} \\ -\underline{\mathbf{e}}_i & \underline{\mathbf{B}}_{i-1} \end{bmatrix} \cdot \Theta_i = \begin{bmatrix} r_i^{1/2} & \underline{\mathbf{0}} \\ \underline{\mathbf{k}}_i & \underline{\mathbf{P}}_i^{1/2} \\ \underline{\mathbf{l}}_i & \underline{\mathbf{B}}_i \end{bmatrix} ,$$

where $\underline{\mathbf{P}}_i^{1/2}$ is the first matrix for $i$-th iteration, $\underline{\mathbf{B}}_i$ is the second matrix for the $i$-th iteration, $\underline{\mathbf{h}}_i$ is $i$-th row of the channel response matrix, $\underline{\mathbf{e}}_i$ is a vector with one for $i$-th element and zeros elsewhere, $\underline{\mathbf{k}}_i$ and $\underline{\mathbf{l}}_i$ are non-essential vectors, $r_i^{1/2}$ is a scalar, $\underline{\mathbf{0}}$ is a vector with all zeros, and $\Theta_i$ is a transformation matrix representing the at least two rotations for the $i$-th iteration.

20. The apparatus of 14, wherein the second processor is operative to derive the spatial filter matrix based on the following equation:

$$\underline{\mathbf{M}} = \underline{\mathbf{P}}^{1/2} \cdot \underline{\mathbf{B}}^{H} ,$$

where $\underline{\mathbf{M}}$ is the spatial filter matrix, $\underline{\mathbf{P}}^{1/2}$ is the first matrix, $\underline{\mathbf{B}}$ is the second matrix, and "$H$" is a conjugate transpose.

21. A method of deriving a spatial filter matrix, comprising:

   performing a plurality of rotations to iteratively obtain a first matrix and a second matrix for a pseudo-inverse matrix of a channel response matrix; and
   deriving the spatial filter matrix based on the first and second matrices.

22. The method of 21, wherein the performing the plurality of rotations comprises, for each of a plurality of iterations,

   forming an intermediate matrix based on the first matrix, the second matrix, and a channel response row vector corresponding to a row of the channel response matrix, and
   performing at least two rotations on the intermediate matrix to zero out at least two elements of the intermediate matrix.

23. The method of 21, wherein the performing the plurality of rotations comprises

   performing a Givens rotation for each of the plurality of rotations to zero out one element of an intermediate matrix containing the first and second matrices.

24. An apparatus comprising:

   means for performing a plurality of rotations to iteratively obtain a first matrix and a second matrix for a pseudo-inverse matrix of a channel response matrix; and
   means for deriving a spatial filter matrix based on the first and second matrices.

25. The apparatus of 24, wherein the means for performing the plurality of rotations comprises, for each of a plurality of iterations,

   means for forming an intermediate matrix based on the first matrix, the second matrix, and a channel response row vector corresponding to a row of the channel response matrix, and
   means for performing at least two rotations on the intermediate matrix to zero out at least two elements of the intermediate matrix.

26. The apparatus of 24, wherein the means for performing the plurality of rotations comprises

means for performing a Givens rotation for each of the plurality of rotations to zero out one element of an intermediate matrix containing the first and second matrices.

27. An apparatus comprising:

a first processor operative to derive a channel response matrix; and
a second processor operative to derive a first matrix based on the channel response matrix, to decompose the first matrix to obtain a unitary matrix and a diagonal matrix, and to derive the spatial filter matrix based on the unitary matrix, the diagonal matrix, and the channel response matrix.

28. The apparatus of 27, wherein the second processor is operative to perform eigenvalue decomposition of the first matrix to obtain the unitary matrix and the diagonal matrix.

29. The apparatus of 27, wherein the second processor is operative to perform a plurality of Jacobi rotations on the first matrix to obtain the unitary matrix and the diagonal matrix.

30. The apparatus of 27, wherein the second processor is operative to derive the first matrix based on the following equation:

$$\underline{X} = \sigma_n^2 \cdot \underline{I} + \underline{H}^H \cdot \underline{H} \ ,$$

where $\underline{X}$ is the first matrix, $\underline{H}$ is the channel response matrix, $\underline{I}$ is an identity matrix, $\sigma_n^2$ is noise variance, and "$H$" is a conjugate transpose.

31. The apparatus of 27, wherein the second processor is operative to derive the spatial filter matrix based on the following equation:

$$\underline{M} = \underline{V} \cdot \underline{\Lambda}^{-1} \cdot \underline{V}^H \cdot \underline{H}^H \ ,$$

where $\underline{M}$ is the spatial filter matrix, $\underline{H}$ is the channel response matrix, $\underline{V}$ is the unitary matrix, $\Lambda$ is the diagonal matrix, and "$H$" is a conjugate transpose.

32. A method of deriving a spatial filter matrix, comprising:

deriving a first matrix based on a channel response matrix;
decomposing the first matrix to obtain a unitary matrix and a diagonal matrix; and
deriving the spatial filter matrix based on the unitary matrix, the diagonal matrix, and the channel response matrix.

33. The method of 32, wherein the decomposing the first matrix comprises

performing eigenvalue decomposition of the first.matrix to obtain the unitary matrix and the diagonal matrix.

34. The method of 32, wherein the decomposing the first matrix comprises

performing a plurality of Jacobi rotations on the first matrix to obtain the unitary matrix and the diagonal matrix.

35. An apparatus comprising:

means for deriving a first matrix based on a channel response matrix;
means for decomposing the first matrix to obtain a unitary matrix and a diagonal matrix; and
means for deriving a spatial filter matrix based on the unitary matrix, the diagonal matrix, and the channel response matrix.

36. The apparatus of 35, wherein the means for decomposing the first matrix comprises

means for performing eigenvalue decomposition of the first matrix to obtain the unitary matrix and the diagonal matrix.

37. The apparatus of 35, wherein the means for decomposing the first matrix comprises

means for performing a plurality of Jacobi rotations on the first matrix to obtain the unitary matrix and the diagonal matrix.

**Claims**

1. A method of deriving a spatial filter matrix, comprising:

   deriving a first matrix based on a channel response matrix;
   decomposing the first matrix to obtain a unitary matrix and a diagonal matrix; and
   deriving the spatial filter matrix based on the unitary matrix, the diagonal matrix, and the channel response matrix.

2. The method of claim 1, wherein the decomposing the first matrix comprises

   performing eigenvalue decomposition of the first matrix to obtain the unitary matrix and the diagonal matrix.

3. The method of claim 1, wherein the decomposing the first matrix comprises

   performing a plurality of Jacobi rotations on the first matrix to obtain the unitary matrix and the diagonal matrix.

4. The method of claim 1, wherein deriving the spatial filter matrix comprises deriving the first matrix based on the following equation:

$$\underline{X} = \sigma_n^2 \cdot \underline{I} + \underline{H}^H \cdot \underline{H} \ ,$$

   where $\underline{X}$ is the first matrix, $\underline{H}$ is the channel response matrix, $\underline{I}$ is an identity matrix, $\sigma_n^2$ is noise variance, and "$H$" is a conjugate transpose.

5. The method of claim 1, wherein deriving the spatial filter matrix comprises deriving the first matrix based on the following equation:

$$\underline{M} = \underline{V} \cdot \underline{\Lambda}^{-1} \cdot \underline{V}^H \cdot \underline{H}^H \ ,$$

   where $\underline{M}$ is the spatial filter matrix, $\underline{H}$ is the channel response matrix, $\underline{V}$ is the unitary matrix, $\underline{\Lambda}$ is the diagonal matrix, and "$H$" is a conjugate transpose.

6. An apparatus comprising:

means for deriving a first matrix based on a channel response matrix;
means for decomposing the first matrix to obtain a unitary matrix and a diagonal matrix; and
means for derivirig a spatial filter matrix based on the unitary matrix, the diagonal matrix, and the channel response matrix.

7. The apparatus of claim 6, wherein the means for decomposing the first matrix comprises

   means for performing eigenvalue decomposition of the first matrix to obtain the unitary matrix and the diagonal matrix.

8. The apparatus of claim 6, wherein the means for decomposing the first matrix comprises

   means for performing a plurality of Jacobi rotations on the first matrix to obtain the unitary matrix and the diagonal matrix.

9. The apparatus of claim 6, wherein:

   the means for deriving a first matrix comprises a first processor operative to derive a channel response matrix; and
   the means for deriving a spatial filter matrix comprises a second processor operative to derive a first matrix based on the channel response matrix, to decompose the first matrix to obtain a unitary matrix and a diagonal matrix, and to derive a spatial filter matrix based on the unitary matrix, the diagonal matrix, and the channel response matrix.

10. The apparatus of claim 9, wherein the second processor is operative to perform eigenvalue decomposition of the first matrix to obtain the unitary matrix and the diagonal matrix.

11. The apparatus of claim 9, wherein the second processor is operative to perform a plurality of Jacobi rotations on the first matrix to obtain the unitary matrix and the diagonal matrix.

12. The apparatus of claim 9, wherein the_ second processor is operative to derive the first matrix based on the following equation:

$$\underline{X} = \sigma_n^2 \cdot \underline{I} + \underline{H}^H \cdot \underline{H} \ ,$$

where $\underline{X}$ is the first matrix, $\underline{H}$ is the channel response matrix, $\underline{I}$ is an identity matrix, $\sigma_n^2$ is noise variance, and "$H$" is a conjugate transpose.

13. The apparatus of claim 9, wherein the second processor is operative to derive the spatial filter matrix based on the following equation:

$$\underline{M} = \underline{V} \cdot \underline{\Lambda}^{-1} \cdot \underline{V}^H \cdot \underline{H}^H \ ,$$

where $\underline{M}$ is the spatial filter matrix, $\underline{H}$ is the channel response matrix, $\underline{V}$ is the unitary matrix, $\underline{\Lambda}$ is the diagonal matrix, and "$H$" is a conjugate transpose.

Start

Initialize $\underline{P}_0 = \underline{I}$ — 112

Initialize $i = 1$ — 114

120

Compute $\underline{a}_i = \underline{h}_i \underline{P}_{i\text{-}1}$ — 122

Compute $r_i = \sigma_n^2 + \underline{a}_i \underline{h}_i^H$ — 124

Invert $r_i$ — 126

Compute $\underline{C}_i = \underline{a}_i^H \underline{a}_i$ — 128

Compute $\underline{P}_i = \underline{P}_{i\text{-}1} - r_i^{-1} \underline{C}_i$ — 130

$i = R$? — 132    NO →    $i = i + 1$ — 134

YES

Compute $\underline{M} = \dfrac{1}{\sigma_n^2} \underline{P}_i \underline{H}^H$ — 136

End

100

*FIG. 1*

```
                        ┌─────────────────────────┐
                        │          Start          │
                        └─────────────────────────┘
                                     │
                                     ▼              ┌─212
                        ┌─────────────────────────┐
                        │ Initialize P₀^(1/2) = 1/σₙ I  and  B₀ = 0 │
                        └─────────────────────────┘
```

Initialize $\underline{P}_0^{1/2} = \dfrac{1}{\sigma_n}\underline{I}$  and  $\underline{B}_0 = \underline{0}$

/212

Initialize $i = 1$ and $j = 1$

/214

/220

Form matrix $\underline{Y}_i$ with channel response row vector $\underline{h}_i$ and matrices $\underline{P}_{i-1}^{1/2}$ and $\underline{B}_{i-1}$

/222

Set $\underline{Y}_{i,j} = \underline{Y}_i$

/224

/230

Derive Givens rotation matrix $\underline{G}_{i,j}$ based on elements of $\underline{Y}_{i,j}$

/232

Apply Givens rotation matrix $\underline{G}_{i,j}$ to matrix $\underline{Y}_{i,j}$ and obtain matrix $\underline{Y}_{i,j+1}$

/234

$j = T?$

/236

NO

$j = j + 1$

/238

YES

Obtain updated matrices $\underline{P}_i^{1/2}$ and $\underline{B}_i$ from matrix $\underline{Y}_{i,j+1}$

/240

$i = i + 1$ and $j = 1$

/244

NO

$i = R?$

/242

YES

Compute $\underline{M} = \underline{P}_i^{1/2}\underline{B}^H$

/246

End

*FIG. 2*

200

Start

312

Derive Hermitian matrix
$\underline{P}^{-1}$ based on channel
response matrix $\underline{H}$

314

Perform eigenvalue decomposition
of matrix $\underline{P}^{-1}$ to obtain unitary
matrix $\underline{V}$ and diagonal matrix $\underline{\Lambda}$

316

Derive spatial filter matrix $\underline{M}$
based on unitary matrix $\underline{V}$,
diagonal matrix $\underline{\Lambda}$, and
channel response matrix $\underline{H}$

End

*FIG. 3*

300

FIG. 4

EP 2 204 931 A2